# DEMANDE DE BREVET EUROPEEN

(11) **EP 2 020 325 A2**
(43) Date de publication de la demande: **04.02.2009**
(21) Numéro de dépôt: 08010719.6
(22) Date de dépôt: 12.06.2008
(51) Int. Cl.: B60K 5/12, F16F 1/373, F16F 1/50

(54) **Dispositif pour relier un élément vibrant à un support**

(30) Priorité: 03.08.2007 FR 0705699
(71) Demandeur: anvis SD France S.A.S., 58302 Decize Cedex (FR)
(72) Inventeur: Dupuis, Frédéric, 58000 Nevers (FR)
(74) Mandataire: Schmid, Nils T.F.

(57) **Abrégé**

L'invention concerne un dispositif pour relier un élément vibrant, tel qu'un berceau de moteur d'un véhicule, à un support fixe, tel qu'une caisse du véhicule.

Le dispositif est caractérisé par deux bras rigides (2, 3), l'un susceptible à fixer au élément vibrant et l'autre susceptible à fixer au support fixe, des extrémités adjacentes des deux bras étant enrobées par un corps élastique (9) de façon à permettre un déplacement relatif entre les extrémités adjacentes.

Le dispositif est utilisable notamment dans des systèmes de suspension des véhicules automobiles.

## Description

La présente invention concerne un dispositif pour relier un élément vibrant, comme un berceau de moteur d'un véhicule, à un support fixe, comme une caisse du véhicule.

De tels dispositifs peuvent être utilisés par exemple dans des systèmes de suspension des véhicules automobiles entre la caisse ou la carrosserie et un berceau de moteur avant.

Une biellette connue est divulguée dans US 6,298,962. Elle comprend un corps en forme de tige et deux pièces pour le montage de douilles d'élastomère à chaque extrémité du corps, les pièces étant liées par des joints soudés au corps. Cette biellette comprend des zones déformable susceptible de se déformer en cas d'accident.

L'inconvénient de la biellette selon l'état de la technique est que deux corps élastique doivent être formés dans ses extrémités distales. De plus, de telles biellettes sont compliquées quand à la fabrication et en plus coûteux. En outre, les biellettes de l'état de la technique présente des déformations plastique en cas d'un accident d'un véhicule les comprenant, c'est-à-dire une déformation qui n'est pas réversible.

Un but de l'invention est de résoudre ce problème et en plus, d'avoir un dispositif pour relier un élément vibrant à un support fixe, qui est plus facile à fabriquer et moins lourd.

Ces but sont atteints, conforment à la présente invention, par un dispositif selon la préambule de la revendication 1 qui est caractérisé par deux bras rigides, l'un susceptible à être fixé au élément vibrant et l'autre susceptible à être fixé au support fixe, des extrémités adjacentes sont enrobées par un corps élastique de façon à permettre un déplacement relatif entre les deux extrémités adjacentes. Le dispositif selon l'invention a une double fonction. Il doit se comporter comme un dispositif rigide si l'effort de traction ou de compression est sous une valeur prédéterminée. Si l'effort de la traction ou de la compression est supérieur à cette valeur prédéterminée le dispositif doit se déformer. Alors, le corps élastique ajoute en cas d'un accident une fusibilité au dispositif. Dans ce cas, l'élément vibrant, en particulier le berceau du moteur, est librement déplaçable. Ce comportement est important lors des essais de choc ou des accidents simulés. Un avantage supplémentaire de cette invention est que le dispositif est ajustable et que la prolongation du dispositif est obtenue par une déformation élastique, en particulier d'un élastomère. De plus, un dispositif selon l'invention permet d'éviter l'utilisation des douilles avec des corps d'élastomère aux extrémités distales des bras où les bras sont susceptibles à être fixé au support fixe et respectivement au élément vibrant.

Dans une mode de réalisation préférée les extrémités adjacentes sont disposées dans le corps élastique de façon sans contact.

Il peut être prévue dans une mode de réalisation que les deux bras ont des parties adjacentes s'étendant de l'extrémité adjacent respective en directions essentiellement diamétrales. De plus, les parties adjacentes peuvent être chevauchants quant à l'étendue longitudinale des parties adjacentes, en particulier des parties chevauchantes présentant moins de 50 % du bras respectif, de préférence moins d'un tiers du bras respectif. De cette manière, on obtient une robustesse élevée.

Dans une mode de réalisation préférée un moyen de renforcement est arrangé dans le corps élastique. Le moyen de renforcement permet d'ajuster la raideur du corps élastique, alors les caractéristiques du dispositif quant à la fusibilité dans le cas d'un accident du véhicule.

De préférence, le moyen de renforcement est disposé dans le corps élastique sans contact avec l'un des bras, de préférence avec les deux bras. De cette manière des bruits et des coincements peuvent être évités.

Il peut être prévue dans une mode de réalisation que le moyen de renforcement et le corps élastique sont dimensionnés de façon que une fente soit formée entre le moyen de renforcement et le corps élastique. De cette façon le dispositif présente une plage de fonctionnement à faible raideur et une plage de fonctionnement à plus forte raideur avec des efforts de traction ou compression croissant. De plus, le moyen de renforcement peut limiter une plage de mouvement relatif entre les deux bras. On peut ainsi régler les propriétés élastiques du corps élastique de façon pour obtenir des raideurs prédéterminée pour le champ d'utilisation du dispositif.

Dans une mode de réalisation préférée le moyen de renforcement est un goujon qui présente une étendue longitudinale qui est arrangé essentiellement perpendiculaire à l'étendue longitudinale des parties adjacentes. Il peut être prévu que les deux bras présentent chacun dans les parties adjacentes un passage pour recevoir le goujon. Dans ce cas, les passages peuvent être alignés l'un à l'autre en état de repos du dispositif. Un dispositif conformément à cette mode de réalisation de l'invention est facile à construire.

Une mode de réalisation peut être **caractérisé en ce que** le goujon s'étend au moins entre les passages, de préférence à travers les passages, en particulier au-delà du corps élastique. Dans ce cas, le dispositif selon l'invention présente des propriétés de fonctionnement exceptionnel en cas d'urgence, par exemple dans le cas où le corps d'élastomère est cassé.

En outre, il peut être prévu que le goujon présente à chaque de ses extrémités un renflement, de préférence une saillie, en particulier une saillie circulaire. De plus, le goujon présente aux renflements un diamètre plus grand que le diamètre des passages. Dans une mode de réalisation préférée le goujon a une longueur que les renflements pressent de l'extérieure sur le corps d'élastique. Un goujon avec des renflements ne peut plus glisser facilement par les passages dans les parties adjacentes des bras et forme ainsi un dispositif d'anti-perte.

Il peut être prévu dans une mode de réalisation préférée que le corps élastique est constitué d'un matériau élastique tel qu'un élastomère.

Or, dans un mode de réalisation du dispositif une ensemble du corps élastique, du moyen de renforcement, en particulier du goujon, et d'un évidement dans le corps élastique, le moyen de renforcement étant arrangé dans l'évidement, permet de régler une allongement du ensemble, en particulier en direction de l'étendue longitudinale des parties adjacentes. Ce comportement est important en cas d'un accident. En outre, avec l'ensemble, des réglages des rigidités et/ou de saturation du corps élastique peuvent être effectués en ajustant la longueur du goujon et/ou ajustant une dimension de la fente entre le moyen de renforcement et le corps élastique. Par exemple, l'ensemble est plus rigide si la fente est plus petite, donc si un espacement entre le moyen de renforcement et le corps élastique est plus petit. Alors, il est possible avec le dispositif selon l'invention de façon d'un principe de construction modulaire de régler et ajuster le comportement élastique du dispositif.

Ces différents modes de réalisation possibles de l'invention seront mieux compris à la lecture du exemple donné ci-dessous avec référence aux figures du dessin annexé dans lequel :
- la figure 1 est une vue en perspective du dispositif selon l'invention sous forme d'une biellette ;
- la figure 2 est une vue en dessus de la biellette selon fig. 1 ;
- la figure 3 est une vue en coupe selon la ligne B-B de la figure 2 ; et
- la figure 4 est une vue en coupe selon la ligne A-A de la figure 2.

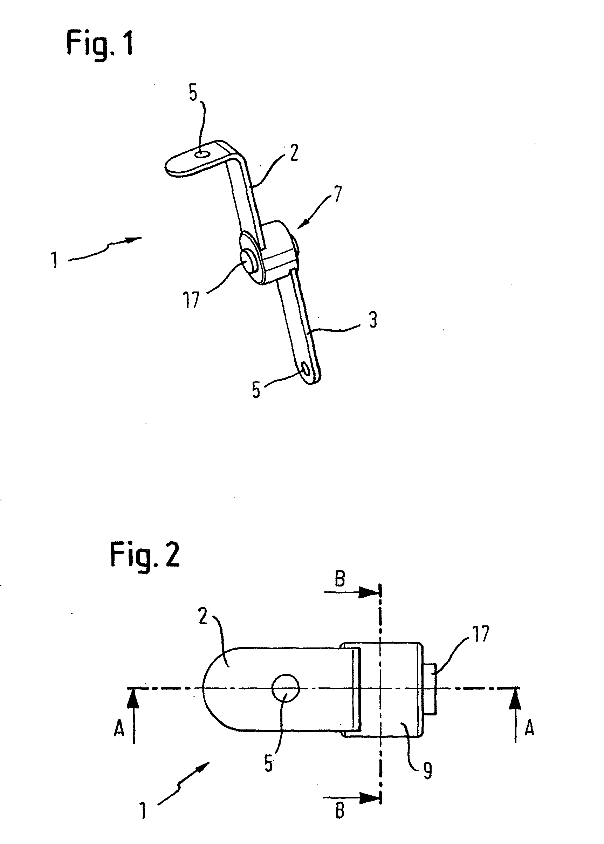

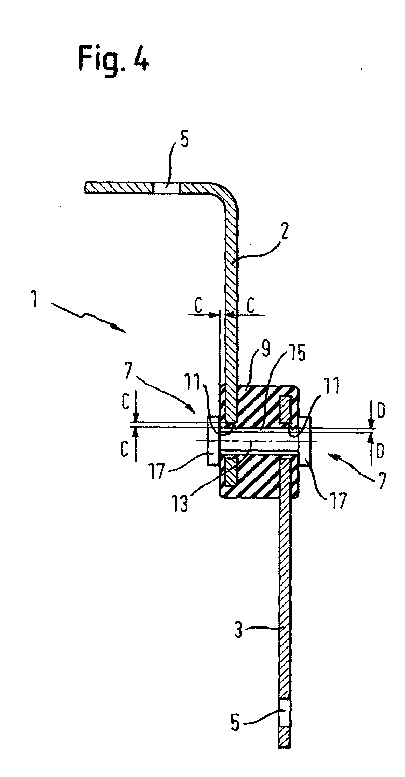

Sur les figures 1 à 4, la biellette est référencée 1. La biellette 1 comprend deux bras 2, 3. Chaque bras 2, 3 présente une extrémité libre avec un trou de montage 5 pour monter chaque bras avec un moyen de fixation à une caisse de véhicule et un berceau de véhicule, respectivement. La forme des bras aux extrémités libres des deux bras 2, 3 et le moyen de fixation peut être choisi librement pour être adapté au cas d'utilisation de la biellette 1. Ainsi, l'un des bras sur les figures 1 et 4 est sous forme d'un « L ». A des extrémités adjacentes de chaque bras 2, 3, c'est-à-dire à des extrémités opposées aux extrémités libres de chaque bras 2, 3, les bras présentent leurs parties adjacentes 7 enrobées par un corps d'élastomère 9, de préférence en caoutchouc surmoulé. Les deux parties adjacentes 7 des deux bras 2, 3 ne se contactent pas et sont seulement liés par le corps d'élastomère 9. Le corps d'élastomère 9 permet en se déformant un déplacement relatif entre les deux bras 2, 3, en particulier entre les deux parties adjacentes 7.

Comme montré dans les Figures 1 et 4, les parties adjacentes 7 s'étendent de leurs extrémités adjacentes respectives de manière sensiblement diamétral. Dans le corps d'élastomère 9, les deux bras 2, 3, en particulier les parties adjacentes 7, chevauchent quant à l'étendue longitudinale des parties adjacentes. Or, les parties adjacentes 7 sont approximativement parallèles et écartées par le corps d'élastomère 9. Les parties adjacentes 7 présentent chacune un passage circulaire 11, les passage 11 étant alignés l'un à l'autre dans un état de repos de la biellette 1. Une coté intérieur de chaque passage 11 et une coté extérieure des parties adjacentes 7 sont complètement couverts par le corps d'élastomère d'une épaisseur C-C. La coté extérieure au chaque partie adjacente 7 d'un bras est une surface détournée de la partie adjacente 7 de l'autre bras. Une pièce de limitation et d'anti-perte, en particulier sous forme d'un goujon cylindrique 13, est arrangée dans un évidement 15 du corps d'élastomère 9 passant par les passages 11 dans les parties adjacentes 7 des bras 2, 3 en delà du corps d'élastomère 9. Donc, les deux bras 2, 3 sont reliés par le goujon. L'épaisseur C-C du corps élastomère à la coté intérieure des passages 11 et à la coté extérieur des parties adjacentes 7 permet d'éviter des bruits et des coincements.

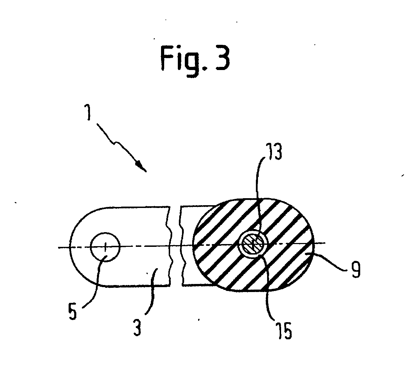

En outre, l'évidement 15 dans le corps d'élastomère 9 est dimensionné pour avoir une fente D-D entre le goujon 13 et le corps d'élastomère 9 (voir aussi la figure 3). Or, les deux bras connectés par le goujon présentent un jeu quant à un déplacement relatif entre les parties adjacentes en direction de l'étendue longitudinale des parties adjacentes. De cette façon, dans le cas des efforts de compression ou de traction en direction de l'étendue longitudinale des parties adjacentes 7, un déplacement relatif entre les deux bras 2, 3 est permis, résultant dans une plage de mouvement à faible raideur et une plage de mouvement à une raideur plus élevée avec des efforts de compression ou de traction croissant jusqu'à les passages 11 forment ensemble avec le goujon 13 une butée, ne permettant plus une déplacement ultérieur, même avec des effort de compression ou de traction très fort. La plage de mouvement à faible raideur est due à la fente D-D entre le goujon 13 et le corps d'élastomère 9. Donc, en cas de compression ou de traction en direction de l'étendue longitudinale des parties adjacentes 7 la biellette 1 selon la Fig. 4 présente une plage de mouvement à faible raideur dans une grandeur de deux fois la distance D-D. La plage de mouvement à raideur plus élevée est due à une partie du corps d'élastomère de l'épaisseur C-C à la coté intérieure des passages 11, en particulier dans le cas où le goujon est pressée contre cette partie du corps d'élastomère, si l'effort de compression ou de traction continu en direction de l'étendue longitudinale des parties adjacentes 7 au-delà de la plage de mouvement à faible raideur. Un mouvement ultérieure au-delà de la plage à raideur plus élevée est bloqué à cause d'une sorte de butée formée par les cotés intérieure des deux passages 11 et le goujon 13. Autrement dit, une plage de mouvement totale en direction de l'étendue longitudinale des parties adjacentes 7 est limitée par la forme des deux passages 11, en particulier par un diamètre des deux passages 11, et la forme du goujon, en particulier des diamètres des parties du goujon 13 qui sont agencées dans les passages 11 en cas d'utilisation de la biellette 1. La grandeur des plages de mouvement à faible raideur et à raideur plus élevée peut être choisie dans la plage de mouvement totale en fonction de la fente D-D et du épaisseur C-C du corps d'élastomère 9. Or, il est facilement possible avec la biellette 1 selon l'invention d'ajuster ses propriétés élastiques.

Dans la figure 4 est montrée que le goujon 13 présente à ses deux extrémités, de préférence à l'extérieur du corps d'élastomère 9, une partie élargie ou un renflement 17 sous forme d'une saillie circulaire qui a un diamètre plus large que le diamètre des passages 11. De cette façon, le goujon 13 ne peut pas glisser à travers des passages 11. Si chaque renflement 17 est formé directement à l'extérieur du corps d'élastomère 9, c'est-à-dire que chaque renflement 17 repose sur une surface extérieure du corps d'élastomère 9, l'agencement du goujon est latéralement fixé. De préférence une longueur du goujon est choisie de façon que les renflements 17 soient pressés de l'extérieure sur le corps d'élastomère.

Le corps d'élastomère 9, le goujon 13 et l'évidement 15 dans le corps d'élastomère 9 ont la fonction de gérer ensemble un allongement de la biellette 1 en direction de l'étendue longitudinale des parties adjacentes 7 en cas d'un accident par exemple et de permettre des réglages de rigidités et de saturation du corps d'élastomère. Ces réglages peuvent être effectués en mettant plus ou moins de compression sur le corps d'élastomère 9 par ajustage de la longueur du goujon 13 et/ou en mettant plus ou moins de jeu axial entre le goujon 13 et le corps d'élastomère 9, c'est-à-dire en ajustant la fente D-D.

Donc, une seule pièce est utilisée dans ce mode de réalisation de l'invention pour avoir une limitation des mouvements relatifs des bras 2, 3 et une sécurisation des deux bras 2, 3, et permet d'ajuster des caractéristiques élastiques de la biellette 1.

## Revendications

1. Dispositif (1) pour relier un élément vibrant, comme un berceau de moteur d'un véhicule, à un support fixe, comme une caisse du véhicule, comprenant deux bras rigides (2, 3), l'un susceptible à fixer au élément vibrant et l'autre susceptible à fixer au support fixe, des extrémités adjacentes des deux bras étant enrobées par un corps élastique (9) de façon à permettre un déplacement relatif entre les extrémités adjacentes, **caractérisé en ce que** le moyen de renforcement (13) est disposé dans le corps élastique (9) sans contact avec l'un des bras (2, 3).

2. Dispositif selon la revendication 1, **caractérisé en ce que** les extrémités adjacentes sont disposé dans le corps élastique (9) de façon sans contact.

3. Dispositif selon l'une quelconque des revendications 1 ou 2, **caractérisé en ce que** les deux bras (2, 3) ont des parties adjacentes (7) s'étendant de l'extrémité adjacent respective en directions essentielles diamétrales.

4. Dispositif selon la revendication 3, **caractérisé en ce que** les parties adjacentes (7) des deux bras (2, 3) chevauchent quant à une étendue longitudinale des parties adjacentes, en particulier des parties chevauchantes présentant moins de 50 % du bras respectif, de préférence moins d'un tiers du bras respectif.

5. Dispositif selon la revendication 5, **caractérisé en ce que** le moyen de renforcement (13) est disposé dans le corps élastique (9) sans contact avec les deux bras (2, 3).

6. Dispositif selon l'une des revendications 1 à 5, **caractérisé en ce que** le moyen de renforcement et le corps élastique sont dimensionnés de façon que une fente est formé entre le moyen de renforcement (13) et le corps élastique (9).

7. Dispositif selon l'une quelconque des revendications 1 à 6, **caractérisé en ce que** le moyen de renforcement (13) est un goujon qui présente une étendue longitudinale qui est arrangée essentiellement perpendiculaire à l'étendue longitudinale des parties adjacentes (7).

8. Dispositif selon l'une quelconque des revendications 1 à 8, **caractérisé en ce que** les deux bras présentent chacun dans la partie adjacente (7) un passage (11) pour recevoir le goujon (13).

9. Dispositif selon la revendication 8, **caractérisé en ce que** les passages (11) sont alignés l'un à l'autre en un état de repos du dispositif (1).

10. Dispositif selon l'une quelconque des revendications 8 ou 9, **caractérisé en ce que** le goujon (13) s'étend au moins entre les passages (11), de préférence à travers les passages (11), en particulier au-delà du corps élastique (9).

11. Dispositif selon la revendication 10, **caractérisé en ce que** le goujon (13) qui présente à chaque de ses extrémités un renflement (17), de préférence une saillie, en particulier une saillie circulaire.

12. Dispositif selon la revendication 11, **caractérisé en ce que** le goujon présente aux renflements (17) un diamètre plus grand qu'un diamètre des passages (11).

13. Dispositif selon l'une des revendications 11 ou 12, **caractérisé en ce que** le goujon a une longueur que les renflements (17) pressent de l'extérieure sur le corps d'élastique.

14. Dispositif selon l'une quelconque des revendications précédentes, **caractérisé en que** le corps élastique est constitué d'un matériau élastique tel qu'un élastomère ou analogue.
